# EUROPÄISCHE PATENTSCHRIFT

(11) **EP 1 611 777 B1**
(45) Veröffentlichungstag und Bekanntmachung des Hinweises auf die Patenterteilung: **09.05.2018**
(21) Anmeldenummer: 04722568.5
(22) Anmeldetag: 23.03.2004
(51) Int. Cl.: H05K 7/14, H02M 7/00, G05B 19/042

(54) **NIEDERSPANNUNGSMODUL**
LOW-VOLTAGE MODULE
MODULE BASSE TENSION

(30) Priorität: 04.04.2003 DE 10315623
(43) Veröffentlichungstag der Anmeldung: 04.01.2006
(73) Patentinhaber: ABB AG, 68309 Mannheim (DE)
(72) Erfinder: MERKEL, Hans-Peter, 69198 Schriesheim (DE); ZANK, Gunnar, 016179 Teutschenthal (DE)
(86) Internationale Anmeldenummer: PCT/EP2004/003040
(87) Internationale Veröffentlichungsnummer: WO 2004/089051

(56) Entgegenhaltungen:
- EP-A- 0 696 829
- EP-A- 0 994 559
- EP-A- 1 256 861
- DE-A- 19 960 870
- DE-U- 9 416 303
- US-A- 4 769 557

## Beschreibung

Die Erfindung betrifft eine Einrichtung zum Steuern und Überwachen eines elektrischen Verbrauchers im Abgang einer Niederspannungsschaltanlage, wie beispielsweise eines Motors.

Die Druckschrift DE 94 16 303 beschreibt eine Antriebssteuereinrichtung zum Steuern, Regeln und Schalten eines Elektromotors, die aus einem Motorschalt- und Steuergerät besteht.

Dieses Steuergerät verfügt über eine Kommunikationsschnittstelle, mittels der es an einen Feldbus angeschlossen wird, und die es ihm ermöglicht, über den Feldbus mit einem Leitsystem zu kommunizieren. Weiterhin besitzt das Steuergerät Eingänge zur Erfassung binärer und analoger Signale, insbesondere zur Messung des Motorlaststromes und eines Fehlerstromes. Auch verfügt es über einen Leistungsteil mit Thyristoren zum Ansteuern des Motors oder eines Schützes. Weitere binäre oder analoge Ausgänge sind nicht vorhanden. Die zentralen Komponenten des Motorschalt- und Steuergeräts sind eine integrierte programmierbare Steuerung und programmierbare Motorschutzfunktionen.

Das Steuergerät stellt eine fertig konfektionierte, nicht konfigurierbare Einheit dar. Alle Komponenten sind fest in einem gemeinsamen Gehäuse untergebracht und ein Austausch einzelner Komponenten ist nicht vorgesehen. Da ein Steuergerät für eine Vielzahl von Anwendungen vorgesehen ist, ist es für spezielle Anwendungen nicht immer optimal konfiguriert. So wird beispielsweise die integrierte, dreiphasige Leistungselektronik, die große Ströme schalten kann, nicht benötigt, wenn ein Schütz anzusteuern ist; in diesem Fall wäre ein elektromagnetisches Relais sinnvoller, da es einen geringeren Platzbedarf und eine geringere Verlustleistung hat.

EP-A2-0994559 offenbart die Verwendung eines Schaltanlagemoduls nach dem Oberbegriff des Anspruchs 1. Aufgabe der Erfindung ist es, eine Einrichtung zum Steuern und Überwachen von elektrischen Verbrauchern in Niederspannungsanlagen zu schaffen, die flexibel an die jeweilige Anforderung angepasst werden kann.

Die Aufgabe wird erfindungsgemäß durch ein Schaltanlagenmodul mit den im Anspruch 1 genannten Merkmalen gelöst. Weitere vorteilhafte Ausgestaltungen der Erfindung sind in den weiteren Ansprüchen angegeben.

Das erfindungsgemäße Schaltanlagenmodul zum Steuern und Überwachen eines elektrischen Verbrauchers im Abgang einer Niederspannungsschaltanlage ist aus mehreren separaten Komponenten aufgebaut, die jeweils einzeln austauschbar sind. Durch diesen modularen Aufbau ist es möglich, das Schaltanlagenmodul jeweils an die vorgesehene Anwendung anzupassen, beispielsweise zum Steuern eines Motors oder eines Energieabgangs.

Ein Schaltanlagenmodul beinhaltet eine oder mehrere Zentraleinheiten und eine oder mehrere Busanbindungseinheiten, wobei jede Busanbindungseinheit eine Kommunikationsschnittstelle zum Anschluss an ein Bussystem besitzt. Über diese Kommunikationsschnittstelle kann das Schaltanlagenmodul über das Bussystem mit anderen Geräten, beispielsweise mit Bedienstationen eines Leitsystems, kommunizieren. Es existieren Kommunikationsschnittstellen für Feldbussysteme, beispielsweise Profibus, und für Steuerungsnetzwerke, beispielsweise Ethernet. Durch Einsatz von zwei oder mehr Busanbindungseinheiten ist ein redundanter Busbetrieb oder ein Betrieb an verschiedenen Bussen möglich.

Weiterhin sind Anschlussplätze zur Aufnahme von einer oder mehreren Leistungseinheiten sowie von einer oder mehreren Ein-/Ausgabeeinheiten vorgesehen.

Im Schaltanlagenmodul ist ein interner Bus vorgesehen, an den alle Komponenten angeschlossen sind und über den die Zentraleinheit mit den übrigen Komponenten kommuniziert. Der interne Bus kann sowohl als serieller Bus als auch als paralleler Bus ausgeführt sein.

Die Zentraleinheit verfügt über einen Mikroprozessor und zugehörigen Datenspeicher und beinhaltet eine programmierbare Steuerung und parametrierbare Schutzfunktionen. In die programmierbare Steuerung kann ein anwendungsspezifisches Programm geladen werden. Entsprechend diesem Programm verarbeitet die Zentraleinheit die von den übrigen Komponenten erhaltenen Daten. Auch die Schutzfunktionen zum Schutz des zu steuernden Verbrauchers können anwendungsspezifisch parametriert werden. Die Zentraleinheit kann eine externe Schnittstelle zum Anschluss einer Bedien-/Parametriereinheit oder eines Programmiergeräts besitzen.

Die externe Schnittstelle der Zentraleinheit kann als elektrische Schnittstelle, beispielsweise RS232 mit 9-poligem SUB-D-Stecker, ausgeführt sein. Weiterhin kann sie als optische Schnittstelle mit Optokopplern ausgeführt sein, wodurch eine galvanische Trennung zwischen Schaltanlagenmodul und Programmiergerät erreicht wird. Eine weitere Verbesserung besteht in der Verwendung einer drahtlosen, beziehungsweise kabellosen Verbindung, beispielsweise durch eine Infrarotschnittstelle (IrDa) oder einer Funkverbindung.

Zur flexiblen Anpassung an die jeweilige Anwendung stehen verschiedenartige Ein-/Ausgabeeinheiten zur Verfügung, mit deren Hilfe weitere Sensoren und Aktoren angebunden werden können. Es existieren Ein-/Ausgabeeinheiten mit binären Eingängen zur Erfassung von Stellungs- oder anderen Meldungen, mit binären Ausgängen zum Ansteuern von Aktoren, mit analogen Eingängen zur Messwerterfassung und mit analogen Ausgängen zur Sollwertvorgabe. Weiterhin sind Ein-/Ausgabeeinheiten vorgesehen, die über eine Kombination aus binären und analogen Eingängen und Ausgängen verfügen.

Die im Schaltanlagenmodul eingesetzten Busanbindungseinheiten und Ein-/Ausgabeeinheiten können zu einer Komponente zusammengefasst werden und so gemeinsam eine Schnittstelleneinheit bilden.

Sofern in der Schaltanlage nicht die erforderlichen Versorgungsspannungen für die Komponenten und Teilkomponenten des Schaltanlagenmoduls verfügbar sind, wird ein Netzteil zur Spannungsversorgung vorgesehen, das ebenfalls in die Schnittstelleneinheit integriert werden kann.

Eine weitere Komponente des Schaltanlagenmoduls ist die Leistungseinheit. Sie verfügt über ein Einspeiseteil, das mit einer Hauptspannungsversorgung, beispielsweise einer Sammelschiene in der Schaltanlage, verbunden wird und ein Abgangsteil, an das der zu steuernde Verbraucher, in der Regel über Kabel, angeschlossen wird. Weiterhin sind eine Messeinrichtung und eine Verarbeitungseinheit in der Leistungseinheit enthalten. Ist der Verbraucher zugeschaltet, so fließt der Strom von der Sammelschiene über das Einspeiseteil durch die Leistungseinheit über das Abgangsteil zum Verbraucher.

Die Leistungseinheit kann zusätzlich ein Hauptschaltgerät und einen Trennschalter beinhalten. Das Hauptschaltgerät kann ein elektromechanisches Schütz oder ein Leistungsschalter sein, aber auch gesteuerte Leistungshalbleiter, beispielsweise Thyristoren, sind denkbar. Der Trennschalter kann von Hand bedienbar oder mit einem elektrischen Antrieb versehen sein.

Aufgabe der Messeinrichtung ist es, analoge Messwerte, insbesondere die Ströme in den Zuleitungen zum Verbraucher, zu erfassen. Weiterhin können die Spannungen der Zuleitungen (Stern- oder Dreieckspannungen) und Temperaturen, beispielsweise die Lufttemperatur in der Leistungseinheit oder Kontakttemperaturen, erfasst werden. Zur Erfassung dieser Werte weist die Messeinrichtung die erforderlichen Sensoren, beispielsweise konventionelle Stromwandler, Kabelumbauwandler, Shunt-Widerstände, Spannungswandler, kapazitive Spannungsteiler und Temperatursensoren in der jeweils benötigten Anzahl auf.

In einer vorteilhaften Ausgestaltung der Erfindung ist der Anschluss weiterer Sensoren zur Messung weiterer Umweltgrößen, wie beispielsweise Druck, Gaskonzentration, Feuchtigkeit oder Kraft, vorgesehen. Mit Hilfe solcher Sensoren kann beispielsweise eine Brandmeldeüberwachung oder eine Betauungsüberwachung realisiert werden.

Weiterhin verfügt die Leistungseinheit über eine Verarbeitungseinheit, die als elektronische Schaltung ausgeführt ist. Die Verarbeitungseinheit besitzt analoge sowie binäre Eingänge zum Einlesen der von der Messeinrichtung gemessenen Werte und der Stellungsmeldungen des Hauptschaltgeräts und des Trennschalters. Auch weitere Zustandsmeldungen, beispielsweise zur Überwachung einer integrierten Sicherungseinheit oder zur Erfassung eines Not-Aus-Befehls, können eingelesen werden. Zusätzlich sind Ausgänge vorgesehen, mit denen das Hauptschaltgerät und der Trennschalter, sofern dieser einen elektrischen Antrieb aufweist, oder sonstige Geräte angesteuert werden können.

Die Verarbeitungseinheit liest die von der Messeinrichtung gemessenen Werte ein und wandelt sie in digitale Werte. Weiterhin berechnet sie, falls Ströme und Spannungen gemessen werden, aus diesen Messwerten die dem Verbraucher zugeführte Wirk-, Blind- und Scheinleistung, sowie den Leistungsfaktor, also das Verhältnis von Wirk- zu Scheinleistung. Auch berechnet sie, wahlweise aus einem Strom- oder Spannungsverlauf, die Frequenz des Versorgungsnetzes.

Zu diesem Zweck verfügt die Verarbeitungseinheit beispielsweise über einen digitalen Signalprozessor und entsprechenden Datenspeicher.

Zur lokalen Bedienung des Schaltanlagenmoduls ist eine Bedien-/Parametriereinheit vorgesehen, die je nach Ausführung optische Anzeigen zur Darstellung von Zustandsmeldungen und Analogwerten, beispielsweise der gemessenen Ströme, sowie Schalter und Tasten, unter anderem zur Eingabe von Schaltbefehlen, aufweisen kann. Auch eine Parametrierung der Schutzfunktionen des Schaltanlagenmoduls ist mit Hilfe der Bedien-/Parametriereinheit möglich.

Die Bedien-/Parametriereinheit wird über eine erste Schnittstelle mit der externen Schnittstelle der Zentraleinheit verbunden.

Diese erste Schnittstelle der Bedien-/Parametriereinheit kann, ebenso wie die externe Schnittstelle der Zentraleinheit, als elektrische, optische oder drahtlose Schnittstelle ausgeführt sein.

In einer Weiterbildung der Bedien-/Parametriereinheit wird eine zweite Schnittstelle vorgesehen, an die ein Programmiergerät angeschlossen werden kann.

Das Programmiergerät zur Programmierung der Zentraleinheit kann also einerseits direkt an die externe Schnittstelle der Zentraleinheit oder, falls eine Bedien-/Parametriereinheit angeschlossen ist, an die zweite Schnittstelle der Bedien-/Parametriereinheit angeschlossen werden.

Auch die zweite Schnittstelle der Bedien-/Parametriereinheit kann als elektrische, optische oder drahtlose Schnittstelle ausgeführt sein.

Die Programmierung der programmierbaren Steuerung und die Parametrierung der Schutzfunktionen erfolgt in der Regel über ein Programmiergerät, das als Standard-PC oder Standard-PDA ausgeführt ist, und auf dem eine spezielle Programmieroberfläche installiert ist.

In einer vorteilhaften Ausgestaltung der Erfindung werden die Programmieroberfläche und ein Webserver in die Zentraleinheit integriert, so dass die Programmierung und die Parametrierung mit Hilfe eines Standard-Webbrowsers, der auf einem Standard-PC oder einem Standard-PDA installiert ist, durchgeführt werden können. Auch eine einfache Bedienung des Schaltanlagenmoduls, das heißt, Anzeigen von Messwerten und Zustandsmeldungen sowie Eingabe von Schaltbefehlen, ist mit Hilfe des Standard-Webbrowsers möglich.

Die Zentraleinheit kann zusätzlich auch über die Busanbindungseinheit und das angeschlossene Bussystem von einem Programmierplatz aus programmiert und parametriert werden. Auch in diesem Fall kann der in der Zentraleinheit integrierte Webserver genutzt werden, so dass auf dem Programmierplatz nur ein Standard-Webbrowsers benötigt wird. Gleiches gilt für die Steuerung und Überwachung des Schaltanlagenmoduls von einer an das Bussystem angeschlossenen Leitstation.

Anhand der folgenden Zeichnung werden ein Ausführungsbeispiel und Details der Erfindung näher erläutert.

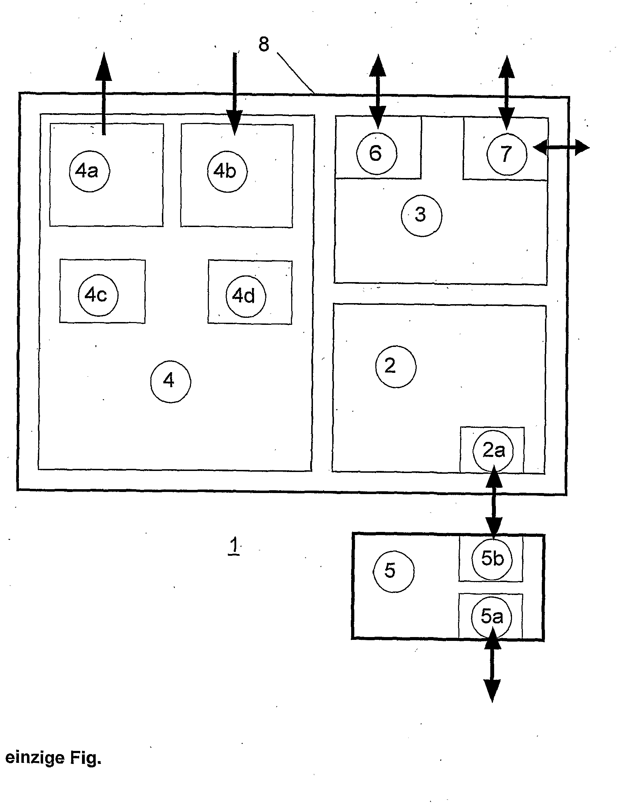

Die einzige Fig. zeigt schematisch den Aufbau eines erfindungsgemäßen Schaltanlagenmoduls. Im Inneren des Schaltanlagenmoduls 1 befinden sich eine Zentraleinheit 2, eine Busanbindungseinheit 6, eine Ein-/Ausgabeeinheit 7 und eine Leistungseinheit 4. Die Busanbindungseinheit 6 und die eine Ein-/Ausgabeeinheit 7 bilden zusammen eine Schnittstelleneinheit 3.

Die Busanbindungseinheit 6 und die Ein-/Ausgabeeinheit 7 werden jeweils mit Hilfe von Steckverbindern in der Rückwand 8 des Schaltanlagenmoduls 1 mit den entsprechenden Gegensteckern im Einschubfach der Schaltanlage verbunden. Einzelne Schnittstellen der Ein/-Ausgabeeinheit 7 können auch zu einer anderen Außenwand des Schaltanlagenmoduls 1 verkabelt sein.

Auch das Einspeiseteil 4b und das Abgangsteil 4a der Leistungseinheit 4 werden jeweils mit Hilfe von Steckverbindern in der Rückwand 8 des Schaltanlagenmoduls 1 mit den entsprechenden Gegensteckern im Einschubfach der Schaltanlage verbunden. Weiterhin weist die Leistungseinheit 4, einen hier nicht gezeigten Trennschalter, ein hier nicht gezeigtes Hauptschaltgerät, eine Messeinrichtung 4c und eine Verarbeitungseinheit 4d auf.

Die im Schaltanlagenmodul 1 enthaltene Zentraleinheit 2 weist eine externe Schnittstelle 2a auf, an die eine Bedien-/Parametriereinheit 5 angeschlossen ist. Die Bedien-/Parametriereinheit 5 besitzt neben der Schnittstelle 5b zum Anschluss an die Zentraleinheit 2 noch eine Schnittstelle 5a zum Anschluss eines Programmiergerätes.

## Patentansprüche

1. Verwendung eines Schaltanlagenmoduls (1) mit mindestens einer Kommunikationsschnittstelle zum Anschluss an ein Bussystem, mit einer programmierbaren Steuerung und mit parametrierbaren Schutzfunktionen, zum Steuern und Überwachen mindestens eines elektrischen Verbrauchers im Abgang einer Niederspannungsschaltanlage,
wobei das Schaltanlagenmodul (1) aus austauschbaren Komponenten aufgebaut ist und mindestens eine Zentraleinheit (2) sowie mindestens eine Busanbindungseinheit (6) mit einer Kommunikationsschnittstelle zum Anschluss an ein Bussystem aufweist, mittels welcher das Schaltanlagenmodul über das Bussystem mit anderen Geräten kommuniziert,
wobei zusätzliche Anschlussplätze zur Aufnahme von wenigstens einer Leistungseinheit (4), welche über ein Einspeiseteil sowie ein Abgangsteil verfügt, sowie wenigstens einer Ein-/Ausgabeeinheit (7) vorgesehen sind, und wobei zur Kommunikation der Zentraleinheit (2) mit den übrigen im Schaltanlagenmodul (1) befindlichen Komponenten ein interner Bus vorgesehen ist, wobei bei zugeschaltetem Verbraucher der Strom über das Einspeiseteil durch die Leistungseinheit über das Abgangsteil zum Verbraucher fliesst, **dadurch gekennzeichnet, dass** ein anwendungsspezifisches Programm in die programmierbare Steuerung geladen wird und entsprechend diesem Programm die Zentraleinheit die von den übrigen Komponenten erhaltenen Daten verarbeitet, wobei die Schutzfunktionen des Schaltanlagenmoduls (1) zum Schutz des Verbrauchers anwendungsspezifisch parametriert werden.

2. Verwendung nach Anspruch 1, **dadurch gekennzeichnet, dass** die Zentraleinheit (2) eine programmierbare Steuerung und parametrierbare Schutzfunktionen aufweist und dass eine externe Schnittstelle (2a) zum Anschluss einer Bedien-/Parametriereinheit (5) oder eines Programmiergeräts vorgesehen ist.

3. Verwendung nach Anspruch 2, **dadurch gekennzeichnet, dass** die externe Schnittstelle (2a) als elektrische, optische oder drahtlose Schnittstelle ausgeführt ist.

4. Verwendung nach einem der vorstehenden Ansprüche, **dadurch gekennzeichnet, dass** eine Ein-/Ausgabeeinheit (7) binäre Eingänge, binäre Ausgänge, analoge Eingänge, analoge Ausgänge oder eine Kombination daraus aufweist.

5. Verwendung nach einem der vorstehenden Ansprüche, **dadurch gekennzeichnet, dass** die mindestens eine Busanbindungseinheit (6) gemeinsam mit einer oder mehreren weiteren vorgesehenen Busanbindungseinheiten (6) und/oder einer oder mehreren vorgesehenen Ein-/Ausgabeeinheiten (7) eine Schnittstelleneinheit (3) bildet.

6. Verwendung nach einem der vorstehenden Ansprüche, **dadurch gekennzeichnet, dass** eine Leistungseinheit (4) ein Abgangsteil (4a), ein Einspeiseteil (4b), eine Messeinrichtung (4c) und eine Verarbeitungseinheit (4d) aufweist.

7. Verwendung nach Anspruch 6, **dadurch gekennzeichnet, dass** eine Leistungseinheit (4) zusätzlich ein Hauptschaltgerät und/oder einen Trennschalter aufweist.

8. Verwendung nach Anspruch 6, **dadurch gekennzeichnet, dass** die Messeinrichtung (4c) einen oder mehrere Sensoren zur Strommessung und/oder zur Spannungsmessung und/oder zur Temperaturmessung aufweist.

9. Verwendung nach Anspruch 8, **dadurch gekennzeichnet, dass** die Messeinrichtung (4c) weitere Sensoren zur Messung weiterer Umweltgrößen aufweist.

10. Verwendung nach einem der Ansprüche 7, 8 oder 9, **dadurch gekennzeichnet, dass** die Verarbeitungseinheit (4d) als elektronische Schaltung ausgeführt ist und Eingänge zum Einlesen der von der Messeinrichtung (4c) gemessenen Werte und/oder Eingänge zum Einlesen von Stellungsmeldung des Hauptschaltgeräts und/oder des Trennschalters und/oder sonstigen Zustandsmeldungen und/oder Ausgänge zur Ansteuerung des Hauptschaltgeräts und/oder des Trennschalters und/oder sonstiger Geräte aufweist.

11. Verwendung nach Anspruch 10, **dadurch gekennzeichnet, dass** die Verarbeitungseinheit (4d) Mittel aufweist, um aus den von der Messeinrichtung (4c) eingelesenen Strömen und Spannungen die dem Verbraucher zugeführte Wirkleistung, die dem Verbraucher zugeführte Blindleistung, die dem Verbraucher zugeführte Scheinleistung, den Leistungsfaktor und die Netzfrequenz zu berechnen.

12. Verwendung nach einem der Ansprüche 2 oder 3, **dadurch gekennzeichnet, dass** die Bedien-/Parametriereinheit (5) eine erste Schnittstelle (5b) zum Anschluss an die externe Schnittstelle (2a) der Zentraleinheit (2), sowie optische Anzeigen und/oder Schalter und/oder Tasten aufweist.

13. Verwendung nach Anspruch 12, **dadurch gekennzeichnet, dass** die erste Schnittstelle (5b) als elektrische, optische oder drahtlose Schnittstelle ausgeführt ist.

14. Verwendung nach einem der Ansprüche 12 oder 13, **dadurch gekennzeichnet, dass** die Bedien-/Parametriereinheit (5) eine zweite Schnittstelle (5a) zum Anschluss eines Programmiergeräts aufweist.

15. Verwendung nach Anspruch 14, **dadurch gekennzeichnet, dass** die zweite Schnittstelle (5a) als elektrische, optische oder drahtlose Schnittstelle ausgeführt ist.

16. Verwendung nach einem der Ansprüche 2, 3, 14 oder 15, **dadurch gekennzeichnet, dass** als Programmiergerät ein Standard-PC mit einer entsprechenden Programmieroberfläche oder ein Standard-PDA mit einer entsprechenden Programmieroberfläche vorgesehen ist.

17. Verwendung nach einem der Ansprüche 2, 3, 14, 15 oder 16, **dadurch gekennzeichnet, dass** die Zentraleinheit (2) einen integrierten Webserver aufweist, der eine Programmierung der programmierbaren Steuerung und/oder eine Parametrierung der Schutzfunktionen und/oder eine Bedienung des Schaltanlagenmoduls mit Hilfe eines auf dem Programmiergerät installierten Standard-Webbrowsers ermöglicht.

## Claims

1. Use of a switchgear assembly module (1) having at least one communication interface for connection to a bus system, having a programmable controller and having parameterizable protective functions, for the purpose of controlling and monitoring at least one electrical load in the outgoer of a low-voltage switchgear assembly,
wherein the switchgear assembly module (1) is formed from interchangeable components and has at least one central unit (2) as well as at least one bus connection unit (6) having a communication interface for connection to a bus system, the switchgear assembly module communicating via the bus system with other equipment by means of said communication interface,
wherein additional connection slots are provided for holding at least one power unit (4), which has an infeed section as well as an outgoer section, and at least one input/output unit (7), and wherein an internal bus is provided for communication of the central unit (2) with the rest of the components located in the switchgear assembly module (1), wherein, when the load is connected, the current flows via the infeed section through the power unit via the outgoer section to the load, **characterized in that** an application-specific program is loaded into the programmable controller and the central unit processes the data obtained from the rest of the components in accordance with said program, wherein the protective functions of the switchgear assembly module (1) are parameterized in an application-specific manner to protect the load.

2. Use according to Claim 1, **characterized in that** the central unit (2) has a programmable controller and parameterizable protective functions and **in that** an external interface (2a) is provided for connection of an operating/parameterizing unit (5) or a programming device.

3. Use according to Claim 2, **characterized in that** the external interface (2a) is embodied as an electrical, optical or wireless interface.

4. Use according to one of the preceding claims, **characterized in that** an input/output unit (7) has binary inputs, binary outputs, analogue inputs, analogue outputs or a combination thereof.

5. Use according to one of the preceding claims, **characterized in that** the at least one bus connection unit (6), together with one or more further provided bus connection units (6) and/or one or more further provided input/output units (7), forms an interface unit (3).

6. Use according to one of the preceding claims, **characterized in that** a power unit (4) has an outgoer section (4a), an infeed section (4b), a measuring device (4c) and a processing unit (4d).

7. Use according to Claim 6, **characterized in that** a power unit (4) also has a main switching device and/or an isolating switch.

8. Use according to Claim 6, **characterized in that** the measuring device (4c) has one or more sensors for current measurement and/or for voltage measurement and/or for temperature measurement.

9. Use according to Claim 8, **characterized in that** the measuring device (4c) has further sensors for measuring further environmental variables.

10. Use according to one of Claims 7, 8 or 9, **characterized in that** the processing unit (4d) is embodied as an electronic circuit and has inputs for reading in the values measured by the measuring device (4c) and/or inputs for reading in position messages from the main switching device and/or from the isolating switch and/or other status messages and/or outputs for driving the main switching device and/or the isolating switch and/or other equipment.

11. Use according to Claim 10, **characterized in that** the processing unit (4d) has means in order to use the currents and voltages read in by the measuring device (4c) to calculate the active power supplied to the load, the reactive power supplied to the load, the apparent power supplied to the load, the power factor and the mains frequency.

12. Use according to either of Claims 2 and 3, **characterized in that** the operating/parameterizing unit (5) has a first interface (5b) for connection to the external interface (2a) of the central unit (2), as well as visual indicators and/or switches and/or keys.

13. Use according to Claim 12, **characterized in that** the first interface (5b) is embodied as an electrical, optical or wireless interface.

14. Use according to either of Claims 12 and 13, **characterized in that** the operating/parameterizing unit (5) has a second interface (5a) for connection of a programming device.

15. Use according to Claim 14, **characterized in that** the second interface (5a) is embodied as an electrical, optical or wireless interface.

16. Use according to one of Claims 2, 3, 14 or 15, **characterized in that** a standard PC with an appropriate programming interface or a standard PDA with an appropriate programming interface is provided as the programming device.

17. Use according to one of Claims 2, 3, 14, 15 or 16, **characterized in that** the central unit (2) has an integrated web server, which makes it possible to program the programmable controller and/or to parameterize the protective functions and/or to operate the switchgear assembly module with the aid of a standard web browser installed in the programming device.

## Revendications

1. Utilisation d'un module d'installation de commutation (1) comportant au moins une interface de communication destinée au raccordement à un système de bus, un dispositif de commande programmable et des fonctions de protection paramétrables, pour commander et surveiller au moins une charge électrique à la sortie d'une installation de commutation basse tension, dans lequel le module d'installation de commutation (1) est constitué de composants interchangeables et comporte au moins une unité centrale (2) et au moins une unité de connexion de bus (6) comportant une interface de communication destinée au raccordement à un système de bus, au moyen de laquelle le module d'installation de commutation communique avec d'autres appareils par l'intermédiaire du système de bus,
dans lequel il est prévu des points de raccordement supplémentaires destinés à recevoir au moins un bloc d'alimentation (4), qui comporte une partie d'alimentation et une partie de sortie, et au moins une unité d'entrée/sortie (7), et dans lequel il est prévu un bus interne pour la communication de l'unité centrale (2) avec les composants restants du module d'installation de commutation (1), dans lequel, lorsque la charge est connectée, le courant passant par l'intermédiaire de la partie d'alimentation circule à travers le bloc d'alimentation vers la charge par l'intermédiaire de la partie de sortie,
**caractérisée en ce qu'**un programme spécifique à l'application est chargé dans le dispositif de commande programmable et **en ce que** l'unité centrale traite les données obtenues à partir des composants restants conformément audit programme, dans lequel les fonctions de protection du module d'installation de commutation (1) sont paramétrées de manière spécifique à l'application pour protéger la charge.

2. Utilisation selon la revendication 1, **caractérisée en ce que** l'unité centrale (2) comporte un dispositif de commande programmable et des fonctions de protection paramétrables et **en ce qu'**il est prévu une interface externe (2a) destinée au raccordement d'une unité de commande/paramétrage (5) ou d'un appareil de programmation.

3. Utilisation selon la revendication 2, **caractérisée en ce que** l'interface externe (2a) est réalisée sous la forme d'une interface électrique, optique ou sans fil.

4. Utilisation selon l'une des revendications précédentes, **caractérisée en ce qu'**une unité d'entrée/sortie (7) comporte des entrées binaires, des sorties binaires, des entrées analogiques, des sorties analogiques ou une combinaison de celles-ci.

5. Utilisation selon l'une des revendications précédentes, **caractérisée en ce que** l'au moins une unité de connexion de bus (6) forme une unité d'interface (3) en association avec une ou plusieurs autres unités de connexion de bus (6) prévues et/ou une ou plusieurs unités d'entrée/sortie (7) prévues.

6. Utilisation selon l'une des revendications précédentes, **caractérisée en ce qu'**un bloc d'alimentation (4) comporte une partie de sortie (4a), une partie d'alimentation (4b), un dispositif de mesure (4c) et une unité de traitement (4d).

7. Utilisation selon la revendication 6, **caractérisée en ce qu'**un bloc d'alimentation (4) comporte en outre un appareil de commutation principal et/ou un sectionneur.

8. Utilisation selon la revendication 6, **caractérisée en ce que** le dispositif de mesure (4c) comporte un ou plusieurs capteurs destinés à la mesure du courant et/ou à la mesure de la tension et/ou à la mesure de la température.

9. Utilisation selon la revendication 8, **caractérisée en ce que** le dispositif de mesure (4c) comporte d'autres capteurs destinés à la mesure d'autres variables d'environnement.

10. Utilisation selon l'une des revendications 7, 8 ou 9, **caractérisée en ce que** l'unité de traitement (4d) est réalisée sous la forme d'un circuit électronique et comporte des entrées destinées à lire les valeurs et/ou entrées mesurées par le dispositif de mesure (4c) pour lire des messages de réglage de l'appareil principal et/ou du sectionneur et/ou d'autres messages d'état et/ou sorties pour commander l'appareil principal et/ou le sectionneur et/ou d'autres appareils.

11. Utilisation selon la revendication 10, **caractérisée en ce que** l'unité de traitement (4d) comporte des moyens destinés à calculer, à partir des courants et des tensions lus par le dispositif de mesure (4c), la puissance active délivrée à la charge, la puissance réactive délivrée à la charge, la puissance apparente délivrée à la charge, le facteur de puissance et la fréquence du réseau.

12. Utilisation selon l'une des revendications 2 ou 3, **caractérisée en ce que** l'unité de commande/paramétrage (5) comporte une première interface (5b) destinée au raccordement à l'interface externe (2a) de l'unité centrale (2), ainsi que des indicateurs optiques et/ou des commutateurs et/ou des touches.

13. Utilisation selon la revendication 12, **caractérisé en ce que** la première interface (5b) est réalisée sous la forme d'une interface électrique, optique ou sans fil.

14. Utilisation selon l'une des revendications 12 ou 13, **caractérisée en ce que** l'unité de commande/paramétrage (5) comporte une seconde interface (5a) destinée au raccordement d'un appareil de programmation.

15. Utilisation selon la revendication 14, **caractérisée en ce que** la seconde interface (5a) est réalisée sous la forme d'une interface électrique, optique ou sans fil.

16. Utilisation selon l'une des revendications 2, 3, 14 ou 15, **caractérisée en ce qu'**il est prévu, en tant qu'appareil de programmation, un PC standard comportant une surface de programmation correspondante ou un PDA standard comportant une surface de programmation correspondante.

17. Utilisation selon l'une des revendications 2, 3, 14, 15 ou 16, **caractérisée en ce que** l'unité centrale (2) comporte un serveur web intégré qui permet la programmation du dispositif de commande programmable et/ou le paramétrage des fonctions de protection et/ou la commande du module d'installation de commutation à l'aide d'un navigateur web standard installé sur l'appareil de programmation.
